# EUROPÄISCHE PATENTSCHRIFT

(11) **EP 2 505 899 B1**
(45) Veröffentlichungstag und Bekanntmachung des Hinweises auf die Patenterteilung: **23.10.2013**
(21) Anmeldenummer: 11160881.6
(22) Anmeldetag: 01.04.2011
(51) Int. Cl.: F16L 37/32

(54) **Schnellkupplung für Hydraulik-Druckleitungen**
Quick coupling for hydraulic pressure conduits
Raccordement rapide pour conduits sous pression hydraulique

(43) Veröffentlichungstag der Anmeldung: 03.10.2012
(60) Teilanmeldung: 13183345.1
(73) Patentinhaber: Voswinkel Entwicklungs- und Verwaltungs-GmbH & Co. KG, 58540 Meinerzhagen (DE)
(72) Erfinder: Hartmann, Jürgen, 58339, Breckerfeld (DE)
(74) Vertreter: Zapf, Christoph

(56) Entgegenhaltungen:
- EP-A2- 0 478 495
- EP-A2- 1 355 100
- CN-A- 101 666 403
- DE-A1- 3 509 371
- DE-A1- 10 349 299
- DE-C1- 19 624 365
- DE-U1- 9 422 115
- GB-A- 2 412 956
- US-A- 3 348 575
- US-A- 3 525 361
- US-A1- 2010 034 580

## Beschreibung

Die vorliegende Erfindung betrifft eine Schnellkupplung für Hydraulik-Druckleitungen gemäß dem Oberbegriff des unabhängigen Anspruchs 1.

Eine solche Schnellkupplung ist durch das Dokument GB 2 412 956 A bekannt. Diese Veröffentlichung beschreibt speziell ein Steckerteil einer Hydraulikkupplung mit einem inneren Schließventil, wobei aber ein komplementäres Muffenteil hinsichtlich des inneren Schließventils identisch ausgebildet sein soll. Das Schließventil des Steckerteils besteht aus einem axial beweglichen Ventilkörper, der einen Dichtring trägt, der als Radialdichtung in einer Schließlage mit einer inneren Umfangsfläche eines Gehäuses zusammenwirkt. Der Ventilkörper ist in einer Hülse geführt, die ein Dichtungsschutzelement im Sinne des Oberbegriffs des Anspruchs 1 bildet. Beim Öffnen des Ventils wird erst der Ventilkörper axial verschoben, so dass seine Dichtung von der inneren Gehäuse-Umfangsfläche in die Hülse gelangt. Der Ventilkörper gelangt dann mit einer äußeren Schulter zur Anlage an einer inneren Schulter der Hülse, so dass beim weiteren Öffnen die Hülse mit verschoben wird, bis sie innerhalb des Gehäuses zur Anlage an einem von einer inneren Hülse gebildeten Anschlag gelangt. Indem die Ventil-Ausgestaltung des komplementären Muffenteils identisch sein soll, werden folglich in der gekuppelten Kupplungslage die Ventilkörper bezüglich ihrer axialen Bewegungen auf ein bestimmtes, aber in dem Dokument nicht genauer spezifiziertes Bewegungsspiel begrenzt. Dieses Bewegungsspiel ist aber allein von den Längenverhältnissen der Bauteile abhängig, so dass es durch Herstellungstoleranzen zu unterschiedlich großen Bewegungsspielen kommen kann.

Das Dokument US 3,348,575 A beschreibt eine weitere Hydraulikkupplung, bei der aber in der Kupplungslage gemäß Fig. 4 ein deutliches Bewegungsspiel der Ventilkörper vorhanden ist, und zwar zwischen dem muffenseitigen Ventilkörper und einer diesen aufnehmenden Führungshülse, wobei diese Führungshülse innerhalb des Gehäuses über ein Einschraubstück unbeweglich befestigt ist.

Hydraulik-Schnellkupplungen sind weiterhin in unterschiedlichen Ausgestaltungen aus zahlreichen Veröffentlichungen bekannt. Lediglich beispielhaft sei hier auf das Dokument DE 35 09 371 A1 verwiesen. Bei der darin beschriebenen Hydraulik-Kupplung handelt es sich allerdings um eine spezielle Ausgestaltung, die ein Steckkuppeln auch dann ermöglicht, wenn das eine Kupplungsteil noch unter einem druck-nehmerseitigen Restdruck steht; es handelt sich folglich um eine so genannte UDK-Ausführung (UDK = unter Druck kuppelbar). Solche bekannten Schnellkupplungen haben sich in der Praxis gut bewährt und werden für viele Anwendungen eingesetzt, um Hydraulikleitungen schnell und einfach verbinden und trennen zu können, wobei im getrennten Zustand durch die Schließventile Leckagen vermieden werden.

Nun gibt es in der Hydrauliktechnik auch Fälle, wobei sehr hohe Druckwerte von 500 bar und mehr und in Kombination damit auch starke Hydraulikströmungen von mindestens 600 l/min sowie Druckpulsationen auftreten. Dies ist beispielsweise bei Abbruchbaggern zum hydraulischen Antrieb von Brechzangen der Fall. Für solche Anwendungen wurden in den Hydraulikleitungen bislang keine Schnellkupplungen mit integrierten Schließventilen der oben beschriebenen Art eingesetzt, sondern beidseitig jeder Trennstelle Kugelabsperrhähne. Dies führt aber zu einem recht großen Bauteilaufwand und zu umständlichen Trenn- und Kuppelvorgängen.

Eine Schnellkupplung der zuvor beschriebenen Art wäre für den speziellen Anwendungsfall nicht geeignet. Einerseits könnten die an den kegeligen Ventilkörpern in Dichtungskammern sitzenden elastischen Ringdichtungen bei starken Hydraulikströmungen beschädigt oder sogar herausgerissen, d. h. "ausgewaschen" werden, und Druckpulsationen könnten zu unkontrollierten axialen Ventilbewegungen (Flatterbewegungen) führen. Andererseits sind bisher üblicherweise die Verriegelungsmittel als so genannte Sperrkugelverriegelung ausgebildet, was ebenfalls eine Verwendung nur bis zu einem bestimmten Maximaldruck gestattet.

Der vorliegenden Erfindung liegt die Aufgabe zu Grunde, eine Schnellkupplung der eingangs beschriebenen, gattungsgemäßen Art zu schaffen, die sich besonders für Anwendungen mit hohen Drücken, Druckpulsationen und starken Hydraulikströmungen eignet.

Diese Aufgabe wird durch die Merkmale des unabhängigen Anspruchs 1 gelöst. Vorteilhafte Ausgestaltungen sind in den abhängigen Ansprüchen und in der anschließenden Beschreibung enthalten.

Innerhalb jedes der beiden Kupplungsteile ist ein Dichtungsschutzelement derart angeordnet, dass beim Öffnen des Schließventils zunächst in einem ersten Öffnungshub der Ventilkörper relativ zu dem Dichtungsschutzelement verschoben wird, bis die Ringdichtung von einem Hülsenabschnitt des Dichtungsschutzelementes umfangsgemäß überdeckt ist, wobei erst dann in einem zweiten Öffnungshub durch gemeinsame Verschiebung des Ventilkörpers und des Dichtungsschutzelementes das Schließventil geöffnet wird, wobei in der verriegelten Kupplungslage der Kupplungsteile die aneinanderliegenden Ventilkörper durch innere, die jeweilige Ventilöffnung begrenzende Endanschläge auf ein axiales Bewegungsspiel von maximal 0,4 mm begrenzt sind, wobei erfindungsgemäß das Bewegungsspiel mit einem verstellbaren Anschlagelement auf Null einstellbar ist.

Durch diese Ausgestaltung sind alle Ringdichtungen im Betrieb der Schnellkupplung stets umfangsgemäß überdeckt und dadurch gegen strömungsbedingte Schäden geschützt. Zudem werden die Ventile im gekuppelten Zustand durch die inneren Endanschläge unter allen auftretenden Betriebsbedingungen gegen Flatterbewegungen gehalten, und zwar so, dass es einerseits nicht zu einem pulsierenden Schließen und Öffnen der Ventile kommen kann, und andererseits wird auch durch das begrenzte axiale Bewegungsspiel vermieden, dass die Dichtungen aus ihren durch das jeweilige Dichtungsschutzelement geschützten Stellungen gelangen könnten. Dadurch ist die erfindungsgemäße Schnellkupplung im gekuppelten Zustand nahezu unempfindlich gegen Pulsationen und Strömungen des Hydraulik-Druckmittels.

Bevorzugt ist zudem vorgesehen, dass die Verriegelungsmittel als äußere Verschraubung ausgebildet sind, wobei das eine Kupplungsteil, insbesondere das Steckerteil, eine äußere, drehbare Überwurf-Schraubhülse trägt, die mit einem Innengewinde auf ein Außengewinde des anderen Kupplungsteils, insbesondere des Muffenteils, aufschraubbar ist, wobei die Gewinde als Rechteck- oder Trapezgewinde ausgebildet sind, und wobei innerhalb der Schraubhülse im Übergang von dem Innengewinde zu einem radial nach innen vorspringenden und mit einem Stufenansatz des Kupplungsteils zur Krafteinleitung zusammenwirkenden Ringbund ein schräger, konusartiger Verstärkungsbereich gebildet ist.

Durch diese bevorzugte Ausgestaltung sind die Verriegelungsmittel für eine sehr hohe Haltekraft ausgelegt, so dass sie im Betrieb hohen Drücken und starken Druckpulsationen Stand halten können, ohne dass Schäden oder gar ein Trennen der Kupplungsteile zu befürchten wäre.

Anhand der Zeichnung und darin veranschaulichter, bevorzugter Ausführungsbeispiele soll die Erfindung im Folgenden genauer erläutert werden. Es zeigen:
- Fig. 1: eine erfindungsgemäße Schnellkupplung in einer ersten Ausführungsform im Axialschnitt und in der steckgekuppelten und verriegelten Kupplungslage mit geöffneten Schließventilen,
- Fig. 2: eine Ausschnittvergrößerung des Bereiches II in Fig. 1,
- Fig. 3: die Schnellkupplung gemäß Fig. 1 in einem getrennten, entkuppelten Zustand der beiden Kupplungsteile mit geschlossenen Schließventilen, und zwar
Fig. 3a das Steckerteil im Halb-Axialschnitt und
Fig. 3b das Muffenteil im Axialschnitt,
- Fig. 4: eine Ausschnittvergrößerung des Bereiches IV in Fig. 3b im Dichtungsbereich des geschlossenen Schließventils,
- Fig. 5: eine Darstellung des Muffenteils analog zu Fig. 3b in einem Zustand während des Öffnens des Schließventils,
- Fig. 6: eine Ausschnittvergrößerung des Bereiches VI in Fig. 5 analog zu Fig. 4,
- Fig. 7: eine weitere Ansicht wie in Fig. 3b und Fig. 5 in der ganz geöffneten Stellung des Schließventils,
- Fig. 8: eine Ausschnittvergrößerung des Bereiches VIII in Fig. 7 analog zu Fig. 4 und 6,
- Fig. 9: eine Ausschnittvergrößerung des Bereiches IX in Fig. 2 und 7 in einer vorteilhaften Ausgestaltung,
- Fig. 10: eine gesonderte Darstellung eines flanschartigen Anschlagelementes im Halb-Axialschnitt,
- Fig. 11: eine Ausschnittvergrößerung des Bereiches XI in Fig. 10,
- Fig. 12: eine Darstellung der Schnellkupplung analog zu Fig. 1 in einer alternativen Ausgestaltung,
- Fig. 13: eine Ausschnittvergrößerung des Bereiches XIII in Fig. 12,
- Fig. 14: eine teilgeschnittene Seitenansicht des Steckerteils zur Erläuterung der Verriegelungsmittel,
- Fig. 15: eine Ausschnittvergrößerung des Bereiches XV in Fig. 14,
- Fig. 16: eine halb axial geschnittene Seitenansicht einer Überwurf-Schraubhülse der bevorzugten Verriegelungsmittel und
- Fig. 17: eine Ausschnittvergrößerung des Bereiches XVII in Fig. 16.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

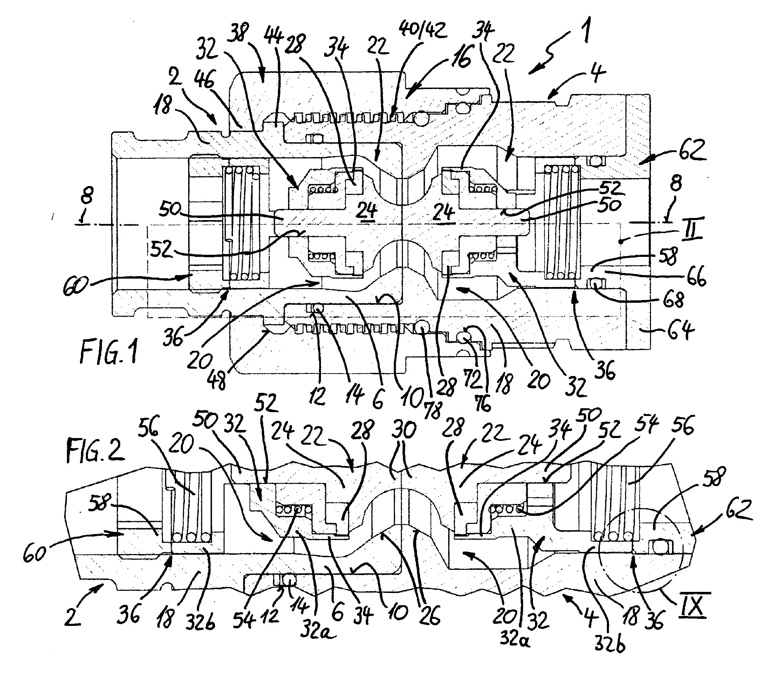

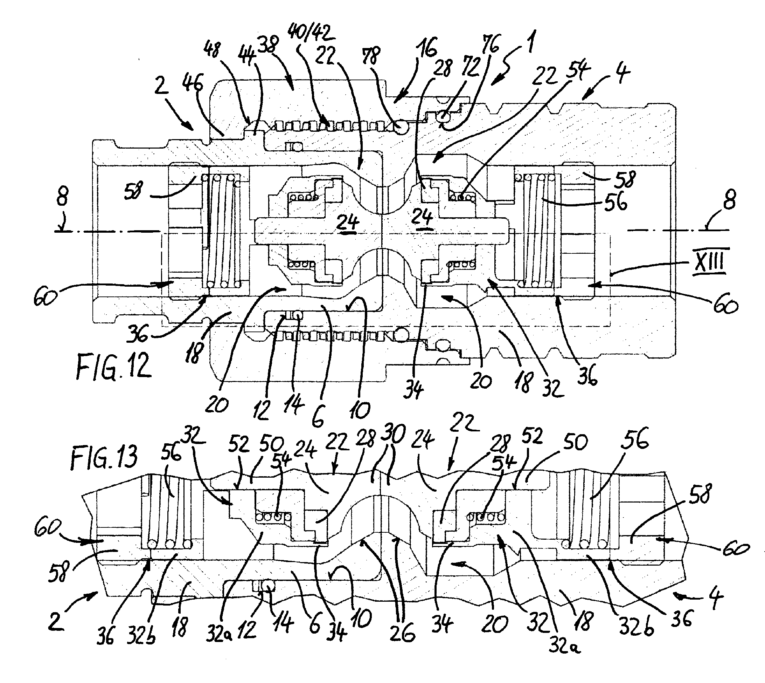

Wie sich zunächst aus Fig. 1 und 12 jeweils ergibt, besteht eine erfindungsgemäße Schnellkupplung 1 aus zwei zusammensteckbaren Kupplungsteilen, und zwar einem Steckerteil 2 und einem Muffenteil 4. Das Steckerteil 2 ist mit einem Steckerschaft 6 unter umfangsgemäßer Abdichtung in Richtung einer Kupplungsachse 8 in eine Aufnahmeöffnung 10 des Muffenteils 4 einsteckbar. Zur umfangsgemäßen Abdichtung ist innerhalb der Aufnahmeöffnung 10 des Muffenteils 4 in einer inneren Ringnut 12 eine Umfangsdichtung 14 angeordnet. In der zusammengesteckten Kupplungslage sind die beiden Kupplungsteile 2, 4 über Verriegelungsmittel 16 lösbar verriegelbar.

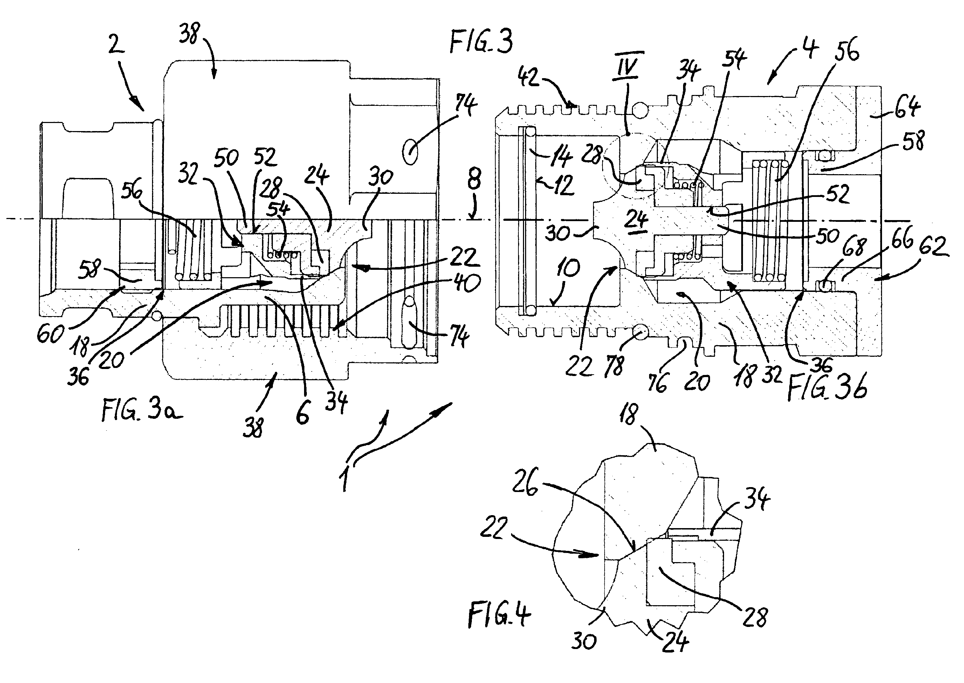

Jedes der beiden Kupplungsteile 2, 4 weist innerhalb eines Gehäuses 18 und eines sich durch das Gehäuse 18 erstreckenden Strömungskanals 20 ein Schließventil 22 mit einer durch Federkraft erzeugten Schließlage auf. Jedes Schließventil 22 besteht aus einem axial beweglichen Ventilkörper 24 und einem gehäuseseitigen, eine Strömungsöffnung umschließenden Ventilsitz 26. Jeder Ventilkörper 24 ist als Ventilkegel ausgebildet, und jeder Ventilsitz 26 ist als entsprechend konische Innenfläche ausgeführt. Hierbei ist jeder Ventilkörper 24 im Dichtungsbereich mit einer elastischen Ringdichtung 28 ausgestattet, die in einer entsprechenden Dichtungskammer gehalten ist. In der Schließlage kommt die jeweilige Ringdichtung 28 in eine dichtende Anlage innerhalb des zugehörigen Ventilsitzes 26. Dazu wird insbesondere auf Fig. 3b und Fig. 4 verwiesen.

Die Schließventile 22 der beiden Kupplungsteile 2, 4 sind innerhalb der Gehäuse 18 so angeordnet und ausgerichtet, dass sich beim Steckkuppeln der Kupplungsteile 2, 4 deren Ventilkörper 24 axial gegenüberliegen und beim Zusammenstecken derart über axiale Ansätze 30 zur Anlage aneinander gelangen, dass sich die Schließventile 22 beim Kuppeln selbsttätig gegenseitig öffnen, indem beim axialen Zusammenführen der beiden Gehäuse 18 die Ventilkörper 24 aus ihren Schließlagen gegen die Federkraft axial in das jeweilige Gehäuse 18 hinein in eine die jeweilige Strömungsöffnung des Strömungskanals 20 öffnende Öffnungslage verschoben werden. Diese Öffnungslage ist in den Fig. 1, 2, 7 und 8 sowie 12 und 13 jeweils veranschaulicht.

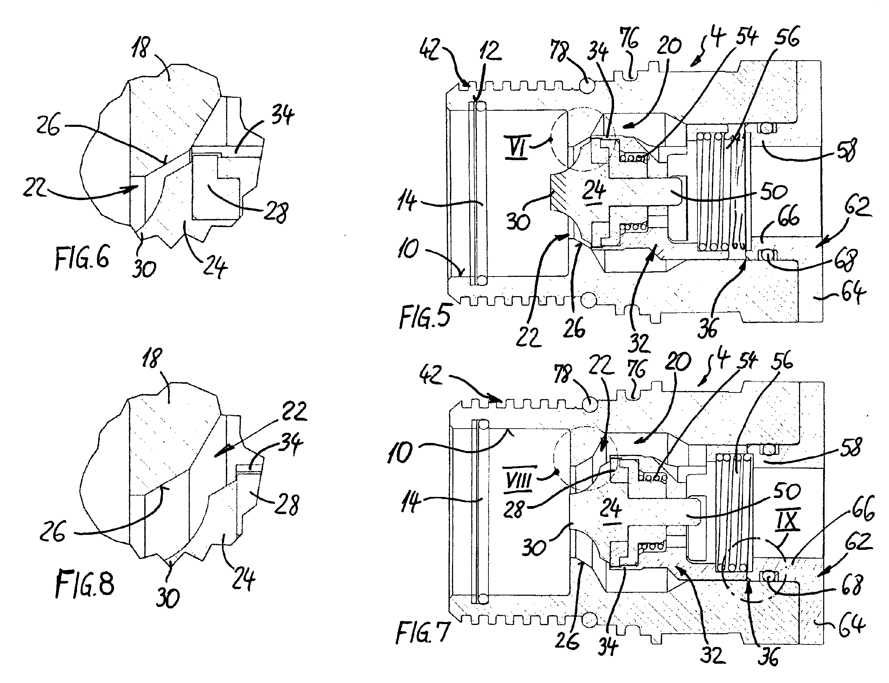

Weiterhin ist vorgesehen, dass innerhalb jedes der beiden Kupplungsteile 2, 4 ein Dichtungsschutzelement 32 derart angeordnet ist, dass beim Öffnen des Schließventils 22 zunächst in einem ersten Öffnungshub der Ventilkörper 24 relativ zu dem Dichtungsschutzelement 32 verschoben wird (siehe dazu den Übergang von Fig. 4 zu Fig. 6), bis die Ringdichtung 28 von einem Hülsenabschnitt 34 des Dichtungsschutzelementes 32 umfangsgemäß überdeckt ist. Erst dann wird in einem zweiten Öffnungshub (siehe den Übergang von Fig. 6 zu Fig. 8) durch gemeinsame Verschiebung des Ventilkörpers 24 zusammen mit dem Dichtungsschutzelement 32 das Schließventil 22 geöffnet. Außerdem ist dabei vorgesehen, dass in der verriegelten Kupplungslage der Kupplungsteile 2, 4 die über ihre Ansätze 30 aneinanderliegenden Ventilkörper 24 durch innere, die jeweilige Ventilöffnung begrenzende Endanschläge 36 auf ein axiales Bewegungsspiel von erfindungsgemäß maximal 0,4 mm begrenzt sind.

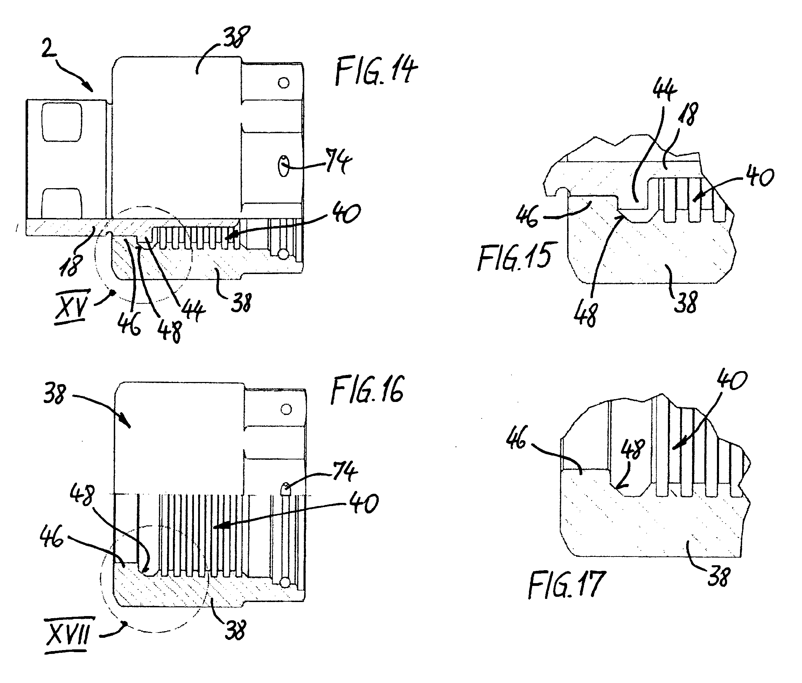

Bevorzugt ist zusätzlich zu der bisher beschriebenen erfindungsgemäßen Ausgestaltung vorgesehen, dass die Verriegelungsmittel 16 als äußere Verschraubung ausgebildet sind, wobei das eine Kupplungsteil, wie dargestellt insbesondere das Steckerteil 2, außen auf seinem Gehäuse 18 eine koaxiale, um die Achse 8 drehbare Überwurf-Schraubhülse 38 trägt, die mit einem Innengewinde 40 auf ein Außengewinde 42 des Gehäuses 18 des anderen Kupplungsteils, insbesondere des Muffenteils 4, aufschraubbar ist. Hierbei sind die Gewinde 40, 42 für eine hohe Tragkraft als Rechteck- oder Trapezgewinde ausgebildet. Außerdem ist gemäß Fig. 14 bis 17 innerhalb der Schraubhülse 38 im Übergang vom Auslauf des Innengewindes 40 zu einem radial nach innen vorspringenden und mit einem Stufenansatz 44 des Gehäuses 18 des Steckerteils 2 zur Krafteinleitung zusammenwirkenden Ringbund 46 ein schräger, konusartiger Verstärkungsbereich 48 gebildet. Durch diese beschriebene Ausgestaltung ist die Verschraubung für eine sehr hohe Haltekraft ausgelegt, so dass die erfindungsgemäße Schnellkupplung 1 für hohe Drücke geeignet ist.

Im Folgenden sollen vorteilhafte Ausgestaltungen der Erfindung erläutert werden.

Die Schließventile 22 der beiden Kupplungsteile 2, 4 sind grundsätzlich gleichartig und in der Kupplungslage nahezu spiegelsymmetrisch ausgebildet, abgesehen von geringfügigen Unterschieden hinsichtlich der effektiven Querschnitte innerhalb der Strömungskanäle 20. Jeder Ventilkörper 24 weist ausgehend von seinem kegelförmigen, die Ringdichtung 28 aufweisenden Bereich auf der dem vorderen Ansatz 30 gegenüberliegenden Seite einen stiftförmigen Führungsansatz 50 auf, der in einer korrespondierenden Führungsöffnung 52 des Dichtungsschutzelementes 32 axial verschiebbar geführt ist. Zwischen jedem Ventilkörper 24 und dem zugehörigen Dichtungsschutzelement 32 ist eine erste Schließfeder 54 angeordnet. Eine zweite Schließfeder 56 ist zwischen dem Dichtungsschutzelement 32 und einem inneren, gehäuseseitigen Widerlager 58 angeordnet. Hierbei ist es für die beschriebene Funktion beim Öffnen der Schließventile 22 wesentlich, dass die erste Schließfeder 54 eine kleinere Federkraft als die zweite Schließfeder 56 erzeugt. Dadurch ist sichergestellt, dass bei der Öffnungsbewegung zunächst die kleinere Federkraft zu überwinden ist, so dass jedenfalls erst der Ventilkörper 24 mit seiner Ringdichtung 28 sich in den Hülsenabschnitt 34 des Dichtungsschutzelementes 32 bewegt, bis anschließend für die eigentliche Ventilöffnung der Ventilkörper 24 zusammen mit dem Dichtungsschutzelement 32 gegen die höhere Federkraft der zweiten Schließfeder 56 verschoben wird, und zwar bis in die Endanschlagstellung.

Wie beispielhaft nur in Fig. 2 und 13 eingezeichnet ist, besteht jedes Dichtungsschutzelement 32 aus einem den Hülsenabschnitt 34 aufweisenden, vorderen Aufnahmeabschnitt 32a für den Ventilkörper 24 und einem hinteren, sich in Öffnungsrichtung anschließenden, ringförmigen und verschiebbar innerhalb des Gehäuses 18 geführten Führungsabschnitt 32b. Im Übergang zwischen dem Aufnahmeabschnitt 32a und dem Führungsabschnitt 32b sind geeignete Strömungsöffnungen für das Hydraulikmedium gebildet (nicht bezeichnet).

Wie sich aus Fig. 3b und 4 ergibt, liegt innerhalb jedes Kupplungsteils 2, 4 in der Ventil-Schließstellung der Hülsenabschnitt 34 des Dichtungsschutzelementes 32 mit einem freien vorderen Stirnringbereich in einem direkt hinter der Ringdichtung 28 liegenden Bereich des Ventilsitzes 26 an, wobei beim Kuppelvorgang - siehe dazu Fig. 6 bis 8 - der Hülsenabschnitt 34 erst dann von dem Bereich des Ventilsitzes 26 abhebt und somit erst dann das Ventil öffnet, wenn die Ringdichtung 28 sich von ihrer Dichtlage auf dem Ventilsitz 26 ganz in den Hülsenabschnitt 34 hinein bewegt hat. Dadurch ist jede Ringdichtung 28 umschlossen und gekammert, bevor eine Hydraulikströmung innerhalb der Kupplungen auftreten kann.

Bei der in Fig. 12 und 13 veranschaulichten Ausführung der Schnellkupplung 1 ist der erfindungsgemäße innere Endanschlag 36 jedes der beiden Kupplungsteile 2, 4 von einem innerhalb des Gehäuses 18 derart axial verstellbar geführten Anschlagelement 60 gebildet, dass bezüglich der jeweiligen Öffnungsstellung das axiale Bewegungsspiel des Ventilkörpers 24 auf Null einstellbar, d. h. kalibrierbar ist. Dabei bildet jedes Anschlagelement 60 gleichzeitig auch das Widerlager 58 für die zweite Schließfeder 56. Bevorzugt ist jedes Anschlagelement 60 als ringförmiges Einschraubteil ausgebildet, welches für seine axiale Einstellbarkeit mit einem Außengewinde in ein Innengewinde des Gehäuses 18 eingreift. Bei dieser Ausführung kann somit durch die zwei gegenüberliegenden, einstellbaren Anschlagelemente 60 das gemeinsame Bewegungsspiel beider Ventilkörper 24 für die gekuppelte Stellung genau auf Null eingestellt werden, so dass die Ventilkörper 24 fest in einer Blockstellung gehalten werden.

Bei der alternativen Ausführungsform, wie sie in den Fig. 1 bis 3 veranschaulicht ist, ist das Steckerteil 2 ebenfalls mit dem bereits beschriebenen verstellbaren Anschlagelement 60 ausgestattet. Allerdings ist der Endanschlag 36 des Muffenteils 4 von einem festen, starr mit dem Gehäuse 18 verbundenen Anschlagelement 62 gebildet. Beispielsweise besteht dieses Anschlagelement 62 aus einem Flanschteil 64 mit einem axialen, in das Gehäuse 18 eingreifenden Rohrstutzen 66, der über eine Dichtung 68 innerhalb des Gehäuses 18 abgedichtet ist. Hierbei bildet der Rohrstutzen 66 gleichzeitig auch das Widerlager 58 für die Schließfeder 56.

Bei dieser Ausführung mit dem starr und nicht einstellbar befestigten Anschlagelement muss durch Herstellungstoleranzen sichergestellt werden, dass das Bewegungsspiel der Ventilkörper 24 in der Kupplungslage jedenfalls < 0,4 mm ist.

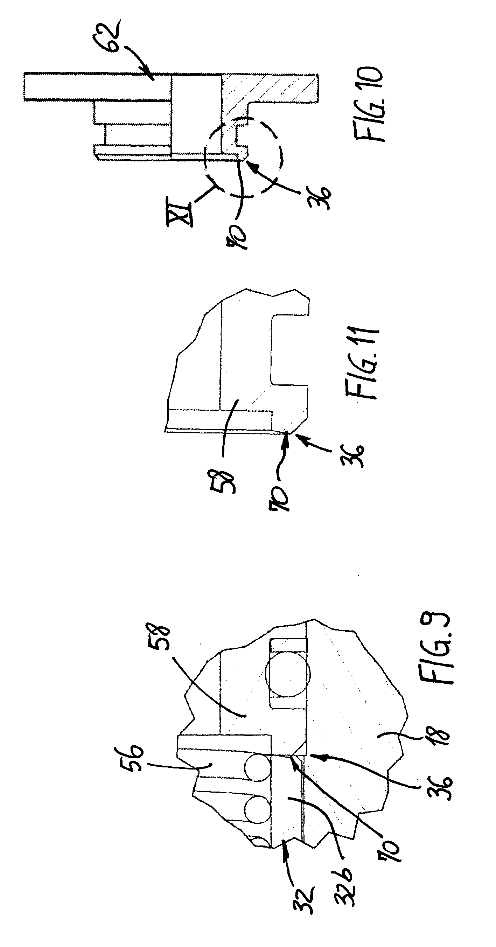

Allerdings kann in einer vorteilhaften Ausgestaltung vorgesehen sein, dass im Anschlagbereich zwischen dem festen Anschlagelement 62 und dem Dichtungsschutzelement 32 bzw. dessen hinterem Führungsabschnitt 32b eine derart plastisch verformte bzw. verformbare Ausgleichszone 70 vorgesehen ist, dass durch einen ersten Kupplungsvorgang ein zunächst vorhandenes axiales Übermaß durch eine Stauchverformung im Bereich der Ausgleichszone 70 auf eine Ventil-Bockstellung mit einem axialen Bewegungsspiel gleich Null reduziert bzw. reduzierbar ist. Zu dieser erfindungsgemäßen Ausgestaltung wird auf die Darstellungen in Fig. 9 bis 11 verwiesen. Demnach kann das Anschlagelement 62 im vorderen, den Endanschlag 36 bildenden Endbereich des Rohrstutzens 66 eine zunächst dachförmige Kontur aufweisen (siehe Fig. 11), die dann gemäß Fig. 9 beim Kuppeln durch Anlage des Führungsabschnittes 32b des Dichtungsschutzelementes 32 zwangsweise verformt wird und/oder sich in den Führungsabschnitt 32b hinein drückt.

In vorteilhafter Ausgestaltung der äußeren Verschraubung ist vorgesehen, dass die Schraubhülse 38 in ihrer verschraubten Verriegelungsstellung mit einem Sicherungselement 72 gegen Lösen arretierbar ist. Dieses Sicherungselement 72 kann mit Vorteil von einem Splint oder dergleichen Sicherungsstift gebildet sein, der durch Queröffnungen 74 der Schraubhülse 38 und tangential durch eine Sicherungsnut 76 des Gehäuses 18 des Muffenteils 4 eingeführt und insbesondere durch Federkraft gehalten wird.

Weiterhin ist bevorzugt in einem Ringspalt zwischen der Schraubhülse 38 des Steckerteils 2 und dem Gehäuse 18 des Muffenteils 4 eine Schmutzdichtung 78 angeordnet, die ein Eindringen von Schmutz, wie insbesondere Staub und dergleichen, in den Gewindebereich verhindert.

Durch die beschriebene Ausgestaltung ist die erfindungsgemäße Schnellkupplung 1 vorteilhafterweise als Hochdruckkupplung geeignet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben.

## Patentansprüche

1. Schnellkupplung (1) für Hydraulik-Druckleitungen, bestehend aus zwei Kupplungsteilen (2, 4), und zwar einem Steckerteil (2) und einem Muffenteil (4), wobei das Steckerteil (2) mit einem Steckerschaft (6) unter umfangsgemäßer Abdichtung in Richtung einer Kupplungsachse (8) in eine Aufnahmeöffnung (10) des Muffenteils (4) einsteckbar ist und die Kupplungsteile (2, 4) in der zusammengesteckten Kupplungslage über Verriegelungsmittel (16) lösbar verriegelbar sind, wobei jedes Kupplungsteil (2, 4) innerhalb eines Gehäuses (18) und eines inneren Strömungskanals (20) ein Schließventil (22) mit einer durch Federkraft erzeugten Schließlage aufweist, wobei jedes Schließventil (22) aus einem axial beweglichen, eine Ringdichtung (28) aufweisenden Ventilkörper (24) und einem gehäuseseitigen, eine Strömungsöffnung umschließenden Ventilsitz (26) für die Ventil-Ringdichtung (28) besteht, und wobei sich beim Kuppeln der Kupplungsteile (2, 4) deren Ventilkörper (24) gegenüberliegen und derart zur Anlage aneinander gelangen, dass sich die Schließventile (22) beim Kuppeln selbsttätig gegenseitig öffnen, indem die Ventilkörper (24) aus ihrer Schließlage gegen die Federkraft axial in das jeweilige Gehäuse (18) hinein in eine die jeweilige Strömungsöffnung öffnende Öffnungslage verschoben werden, wobei innerhalb jedes der beiden Kupplungsteile (2, 4) ein Dichtungsschutzelement (32) derart angeordnet ist, dass beim Öffnen des Schließventils (22) zunächst in einem ersten Öffnungshub der Ventilkörper (24) relativ zu dem Dichtungsschutzelement (32) verschoben wird, bis die Ringdichtung (28) von einem Hülsenabschnitt (34) des Dichtungsschutzelementes (32) umfangsgemäß überdeckt ist, wobei erst dann in einem zweiten Öffnungshub durch gemeinsame Verschiebung des Ventilkörpers (24) und des Dichtungsschutzelementes (32) das Schließventils (22) geöffnet wird, wobei in der verriegelten Kupplungslage der Kupplungsteile (2, 4) die aneinanderliegenden Ventilkörper (24) durch innere, die jeweilige Ventilöffnung begrenzende Endanschläge (36) in ihren axialen Bewegungen begrenzt sind, **dadurch gekennzeichnet, dass** die Ventilkörper (24) auf ein axiales Bewegungsspiel von maximal 0,4 mm begrenzt sind, wobei der Endanschlag (36) mindestens eines der beiden Kupplungsteile (2, 4) von einem innerhalb des Gehäuses (18) derart axial verstellbar geführten Anschlagelement (60) gebildet ist, dass bezüglich der Öffnungsstellung das axiale Bewegungsspiel des Ventilkörpers (24) auf Null einstellbar ist.

2. Schnellkupplung nach Anspruch 1,
**dadurch gekennzeichnet, dass** die Verriegelungsmittel (16) als äußere Verschraubung ausgebildet sind, wobei das eine Kupplungsteil, insbesondere das Steckerteil (2), eine äußere, drehbare Überwurf-Schraubhülse (38) trägt, die mit einem Innengewinde (40) auf ein Außengewinde (42) des anderen Kupplungsteils, insbesondere des Muffenteils (4), aufschraubbar ist, wobei die Gewinde (40, 42) als Rechteck- oder Trapezgewinde ausgebildet sind, und wobei innerhalb der Schraubhülse (38) im Übergang von dem Innengewinde (40) zu einem radial nach innen vorspringenden und mit einem Stufenansatz (44) des Kupplungsteils (2) zur Krafteinleitung zusammenwirkenden Ringbund (46) ein schräger, konusartiger Verstärkungsbereich (48) gebildet ist.

3. Schnellkupplung nach Anspruch 1 oder 2,
**dadurch gekennzeichnet, dass** innerhalb jedes Kupplungsteils (2, 4) der Ventilkörper (24) in seinem die Ringdichtung (28) aufweisenden Bereich kegelförmig ausgebildet ist und einen stiftförmigen, in einer Führungsöffnung (52) des Dichtungsschutzelementes (32) verschiebbar geführten Führungsansatz (50) aufweist.

4. Schnellkupplung nach einem der Ansprüche 1 bis 3,
**dadurch gekennzeichnet, dass** innerhalb jedes Kupplungsteils (2, 4) zwischen dem Ventilkörper (24) und dem Dichtungsschutzelement (32) eine erste Schließfeder (54) und zwischen dem Dichtungsschutzelement (32) und einem inneren, gehäuseseitigen Widerlager (58) eine zweite Schließfeder (56) angeordnet sind, wobei die erste Schließfeder (54) eine kleinere Federkraft als die zweite Schließfeder (56) erzeugt.

5. Schnellkupplung nach einem der Ansprüche 1 bis 4,
**dadurch gekennzeichnet, dass** jedes Dichtungsschutzelement (32) aus einem den Hülsenabschnitt (34) aufweisenden, vorderen Aufnahmeabschnitt (32a) für den Ventilkörper (24) und einem hinteren, sich in Öffnungsrichtung anschließenden, verschiebbar innerhalb des Gehäuses (18) geführten Führungsabschnitt (32b) besteht, wobei im Übergang zwischen dem Aufnahmeabschnitt (32a) und dem Führungsabschnitt (32b) Strömungsöffnungen gebildet sind.

6. Schnellkupplung nach einem der Ansprüche 1 bis 5,
**dadurch gekennzeichnet, dass** innerhalb jedes Kupplungsteils (2, 4) in der Ventil-Schließstellung der Hülsenabschnitt (34) des Dichtungsschutzelementes (32) mit einem freien vorderen Stirnringbereich in einem direkt hinter der Ringdichtung (28) liegenden Bereich des Ventilsitzes (26) zur Anlage gelangt, wobei beim Kuppelvorgang der Hülsenabschnitt (34) erst dann von dem Ventilsitz (26) abhebt, wenn die Ringdichtung (28) sich von ihrer Dichtlage auf dem Ventilsitz (26) ganz in den Hülsenabschnitt (34) hinein bewegt hat.

7. Schnellkupplung nach einem der Ansprüche 1 bis 6,
**dadurch gekennzeichnet, dass** das Anschlagelement (60) für seine axiale Einstellbarkeit mit einem Außengewinde in ein Innengewinde des Gehäuses (18) eingreift.

8. Schnellkupplung nach einem der Ansprüche 1 bis 7,
**dadurch gekennzeichnet, dass** der Endanschlag (36) eines der beiden Kupplungsteile (2, 4) von einem festen, starr mit dem Gehäuse (18) verbundenen Anschlagelement (62) gebildet ist.

9. Schnellkupplung nach Anspruch 8,
**dadurch gekennzeichnet, dass** im Anschlagbereich zwischen dem festen Anschlagelement (62) und dem Dichtungsschutzelement (32) eine derart plastisch verformte oder verformbare Ausgleichszone (70) vorgesehen ist, dass durch einen ersten Kupplungsvorgang ein zunächst vorhandenes axiales Übermaß durch eine Stauchverformung im Bereich der Ausgleichszone (70) auf eine Ventil-Blockstellung mit einem axialen Bewegungsspiel gleich Null reduziert oder reduzierbar ist.

10. Schnellkupplung nach einem der Ansprüche 2 bis 9,
**dadurch gekennzeichnet, dass** die Schraubhülse (38) in der verschraubten Verriegelungsstellung mit einem Sicherungselement (72) gegen Lösen arretierbar ist.

11. Schnellkupplung nach einem der Ansprüche 2 bis 10,
**dadurch gekennzeichnet, dass** in einem Ringspalt zwischen der Schraubhülse (38) des einen Kupplungsteils (2) und dem anderen, das Außengewinde (42) aufweisenden Kupplungsteil (4) eine Schmutzdichtung (78) angeordnet ist.

## Claims

1. Quick coupling (1) for hydraulic pressure conduits, comprising two coupling parts (2, 4), to be precise a plug part (2) and a socket part (4), the plug part (2) being pluggable with a plug shank (6) into a receiving opening (10) of the socket part (4) with circumferential sealing in the direction of a coupling axis (8), and the coupling parts (2, 4) being releasably lockable in the plugged-together coupling position via locking means (16), each coupling part (2, 4) having inside a housing (18) and an inner flow duct (20) a closing valve (22) with a closing position produced by spring force, each closing valve (22) comprising an axially movable valve body (24) with an annular seal (28) and a housing-side valve seat (26), enclosing a flow opening, for the valve annular seal (28), and upon the coupling of the coupling parts (2, 4) their valve bodies (2, 4) lying mutually opposite and coming into mutual abutment in such a manner that the closing valves (22) automatically mutually open upon the coupling by the valve bodies (24) being displaced from their closing position against the spring force axially into the respective housing (18) into an opening position opening the respective flow opening, a seal protection element (32) being arranged inside each of the two coupling parts (2, 4) in such a manner that upon the opening of the closing valve (22) initially in a first opening stroke the valve body (24) is displaced relative to the seal protection element (32) until the annular seal (28) is circumferentially covered by a sleeve section (34) of the seal protection element (32), and only then in a second opening stroke is the closing valve (22) opened by joint displacement of the valve body (24) and the seal protection element (32), the mutually abutting valve bodies (24) in the locked coupling position of the coupling parts (2, 4) being limited in their axial movements by inner end stops (36) bounding the respective valve opening,
**characterised in that** the valve bodies (24) are limited to an axial movement play of at most 0.4 mm, the end stop (36) of at least one of the two coupling parts (2, 4) being formed by a stop element (60) guided axially movably inside the housing (18) in such a manner that the axial movement play of the valve body (24) is adjustable to zero with respect to the opening position.

2. Quick coupling according to Claim 1,
**characterised in that** the locking means (16) are formed as an external screwed connection, one coupling part, in particular the plug part (2), carrying an outer, rotatable union screw sleeve (38) which is screwable with an internal thread (40) onto an external thread (42) of the other coupling part, in particular of the socket part (4), the threads (40, 42) being formed as rectangular or trapezoidal threads, and inside the screw sleeve (38) there being formed an oblique, cone-like reinforcing region (48) at the transition from the internal thread (40) to an annular collar (46) projecting radially inwards and cooperating with a stepped shoulder (44) of the coupling part (2) for force introduction.

3. Quick coupling according to Claim 1 or 2,
**characterised in that** inside each coupling part (2, 4) the valve body (24) is formed conically in its region having the annular seal (28) and has a pin-shaped guiding projection (50) displaceably guided in a guiding opening (52) of the seal protection element (32).

4. Quick coupling according to one of Claims 1 to 3,
**characterised in that** inside each coupling part (2, 4) between the valve body (24) and the seal protection element (32) there is arranged a first closing spring (54) and between the seal protection element (32) and an inner, housing-side abutment (58) there is arranged a second closing spring (56), the first closing spring (54) generating a smaller spring force than the second closing spring (56).

5. Quick coupling according to one of Claims 1 to 4,
**characterised in that** each seal protection element (32) comprises a front receiving section (32a) for the valve body (24) and a rear guiding section (32b) adjoining in the opening direction and displaceably guided inside the housing (18), flow openings being formed at the transition between the receiving section (32a) and the guiding section (32b).

6. Quick coupling according to one of Claims 1 to 5,
**characterised in that** inside each coupling part (2, 4) in the valve closing direction the sleeve section (34) of the seal protection element (32) comes into abutment with a free front, end annular region in a region of the valve seat (26) lying directly behind the annular seal (28), the sleeve section (34) upon the coupling operation lifting off from the valve seat (26) only when the annular seal (28) has moved from its sealing position on the valve seat (26) completely into the sleeve section (34).

7. Quick coupling according to one of Claims 1 to 6,
**characterised in that** the stop element (60), for its axial adjustability, engages with an external thread into an internal thread of the housing.

8. Quick coupling according to one of Claims 1 to 7,
**characterised in that** the end stop (36) of one of the two coupling parts (2, 4) is formed by a fixed stop element (62) connected rigidly to the housing (18).

9. Quick coupling according to Claim 8,
**characterised in that** in the stop region between the fixed stop element (62) and the seal protection element (32) there is provided a compensating zone (70) which is plastically deformed or deformable in such a manner that through a first coupling operation an initially present axial oversize is reduced or reducible by a compression deformation in the region of the compensating zone (70) to a valve blocking position with an axial movement play equal to zero.

10. Quick coupling according to one of Claims 2 to 9,
**characterised in that** the screw sleeve (38) is arrestable against release in the screwed locking position by a securing element (72).

11. Quick coupling according to one of Claims 2 to 10,
**characterised in that** a dirt seal (78) is arranged in an annular gap between the screw sleeve (38) of the one coupling part (2) and the other coupling part (4) having the external thread (42).

## Revendications

1. Raccordement rapide (1) pour conduits sous pression hydraulique, constitué de deux points de raccordement (2, 4), à savoir une partie connecteur (2) et une partie manchon (4), la partie connecteur (2) pouvant être emboîtée en direction d'un axe de raccordement (8) dans une ouverture de réception (10) de la partie manchon (4) par une tige de connecteur (6), avec formation d'une étanchéité sur toute la circonférence, et les parties de raccordement (2, 4) pouvant être verrouillées de manière à pouvoir être desserrées, dans la position de raccordement dans laquelle elles sont assemblées par emboîtement, par des moyens de verrouillage (16), chaque partie de raccordement (2, 4) comprenant, à l'intérieur d'un boîtier (18) et d'un canal d'écoulement intérieur (20), un clapet de fermeture (22) pourvu d'une position de fermeture produite par une force élastique, chaque clapet de fermeture (22) étant constitué d'un corps de clapet (24) axialement mobile, présentant un joint d'étanchéité annulaire (28), et d'un siège de soupape (26) côté boîtier, entourant une ouverture d'écoulement, pour le joint d'étanchéité annulaire (28) du clapet, et, lors du raccordement des parties de raccordement (2, 4), leurs corps de clapet (24) se faisant face et venant en appui l'un contre l'autre, de telle sorte que les clapets de fermeture (22) s'ouvrent mutuellement automatiquement lors du raccordement, les corps de clapets (24) étant déplacés axialement à l'encontre de la force élastique, de leur position de fermeture en direction de l'intérieur du boîtier (18) respectif, dans une position d'ouverture ouvrant l'ouverture d'écoulement respective, un élément de protection de joint (32) étant disposé à l'intérieur de chacune des deux parties de raccordement (2, 4), de telle sorte que lors de l'ouverture du clapet de fermeture (22), le corps de clapet (24) commence par être déplacé au cours d'une première course d'ouverture par rapport à l'élément de protection de joint (32), jusqu'à ce que le joint d'étanchéité annulaire (28) soit recouvert sur toute sa circonférence par une partie douille (34) de l'élément de protection de joint (32), dans lequel le clapet de fermeture (22) n'est ouvert qu'au cours d'un second mouvement commun de course d'ouverture du corps de clapet (24) et de l'élément de protection de joint (32), les déplacements axiaux des corps de clapet (24) appliqués l'un contre l'autre, lorsque les parties de raccordement (2, 4) se trouvent dans la position de raccordement verrouillée, étant limités par des butées de fin de course (36) intérieures délimitant l'ouverture respective de clapet,
**caractérisé en ce que** les corps de clapet (24) sont limités à un jeu axial de 0,4 mm maximum, la butée de fin de course (36) d'au moins une des deux parties de raccordement (2, 4) étant formée par un élément de butée (60) guidé de manière axialement mobile à l'intérieur du boîtier (18), de telle sorte que le jeu axial du corps de clapet (24) par rapport à la position d'ouverture peut être réglé sur zéro.

2. Raccordement rapide selon la revendication 1,
**caractérisé en ce que** les éléments de verrouillage (16) sont conçus sous la forme d'un assemblage vissé extérieur, l'une des parties de raccordement, en particulier la partie connecteur (2), portant une douille filetée d'accouplement (38) extérieure rotative, qui peut être vissée au moyen d'un filet intérieur (40) sur un filet extérieur (42) de l'autre partie de raccordement, en particulier la partie manchon (4), les filets (40, 42) étant conçus sous la forme de filets rectangulaires ou trapézoïdaux, et une zone de renforcement (48) conique et oblique étant formée à l'intérieur de la douille filetée (38), dans la transition du filet intérieur (40) à un collet annulaire (46) faisant radialement saillie vers l'intérieur et coopérant avec un épaulement étagé (44) de la partie de raccordement (2) en vue de l'application d'une force.

3. Raccordement rapide selon la revendication 1 ou 2,
**caractérisé en ce que** la zone du corps de clapet (24), comportant le joint d'étanchéité annulaire (28), est configurée de manière sphérique à l'intérieur de chaque partie de raccordement (2, 4) et présente un épaulement de guidage (50) en forme de broche et guidé mobile dans une ouverture de guidage (52) de l'élément de protection de joint (32).

4. Raccordement rapide selon l'une quelconque des revendications 1 à 3,
**caractérisé en ce qu'**un premier ressort de fermeture (54) est disposé à l'intérieur de chaque partie de raccordement (2, 4) entre le corps de clapet (24) et l'élément de protection de joint (32), et un second ressort de fermeture (56) est disposé entre l'élément de protection de joint (32) et un contre-appui (58) intérieur côté boîtier, le premier ressort de fermeture (54) présentant une force élastique inférieure à celle du second ressort de fermeture (56).

5. Raccordement rapide selon l'une quelconque des revendications 1 à 4,
**caractérisé en ce que** chaque élément de protection de joint (32) est constitué d'une partie de logement avant (32a), comprenant la partie douille (34) pour le corps de clapet (24) et d'une partie de guidage (32b) arrière, se raccordant dans la direction d'ouverture et guidée mobile à l'intérieur du boîtier (18), des ouvertures d'écoulement étant formées dans la transition entre la partie de logement (32a) et la partie de guidage (32b).

6. Raccordement rapide selon l'une quelconque des revendications 1 à 5,
**caractérisé en ce que** la partie douille (34) de l'élément de protection de joint (32), à l'intérieur de chaque partie de raccordement (2, 4), dans la position de fermeture du clapet, vient en appui, par une zone annulaire frontale avant libre, dans une zone du siège de soupape (26) située directement derrière le joint d'étanchéité annulaire (28), la partie douille (34) ne se soulevant du siège de soupape (26), lors de la procédure de raccordement, que lorsque le joint d'étanchéité annulaire (28) s'est entièrement déplacé de sa position d'étanchéité sur le siège de soupape (26) à l'intérieur de la partie douille (34).

7. Raccordement rapide selon l'une quelconque des revendications 1 à 6,
**caractérisé en ce que** l'élément de butée (60), s'engage au moyen d'un filet extérieur dans un filet intérieur du boîtier (18) afin de pouvoir être réglé axialement.

8. Raccordement rapide selon l'une quelconque des revendications 1 à 7,
**caractérisé en ce que** la butée de fin de course (36) d'une des deux parties de raccordement (2, 4) est formée par un élément de butée (62) fixe, relié rigidement au boîtier (18).

9. Raccordement rapide selon la revendication 8,
**caractérisé en ce qu'**une zone de compensation (70) facilement déformée ou déformable est ménagée dans la zone de butée entre l'élément de butée fixe (62) et l'élément de protection de joint (32), de telle sorte qu'une surmesure axiale présente dès le début est réduite ou peut être réduite à zéro au moyen d'une déformation par écrasement dans la région de la zone de compensation (70), sur une position bloquée du clapet avec un jeu axial, par le biais d'une première procédure de raccordement.

10. Raccordement rapide selon l'une quelconque des revendications 2 à 9,
**caractérisé en ce que** la douille filetée (38), dans la position de verrouillage vissée, peut être empêchée d'être desserrée par un élément de blocage (72).

11. Raccordement rapide selon l'une quelconque des revendications 2 à 10,
**caractérisé en ce qu'**un joint antisalissure (78) est disposé dans une fente annulaire entre la douille filetée (38) d'une des parties de raccordement (2) et l'autre partie de raccordement (4) comprenant le filet extérieur (42).
